# EUROPÄISCHE PATENTSCHRIFT

(11) **EP 3 834 276 B1**
(45) Veröffentlichungstag und Bekanntmachung des Hinweises auf die Patenterteilung: **13.09.2023**
(21) Anmeldenummer: 19783977.2
(22) Anmeldetag: 19.09.2019
(51) Int. Cl.: H02M 1/36, H02M 5/458, H02M 7/12, H02M 7/757, H02M 7/758, H02M 1/00

(54) **FREQUENZUMRICHTER MIT VERKÜRZTER VORLADEZEIT**
FREQUENCY INVERTER WITH SHORTENED PRECHARGE TIME
CONVERTISSEUR DE FRÉQUENCE À TEMPS DE CHARGE RÉDUIT

(30) Priorität: 30.10.2018 EP 18203375
(43) Veröffentlichungstag der Anmeldung: 16.06.2021
(73) Patentinhaber: Siemens Aktiengesellschaft, 80333 München (DE)
(72) Erfinder: HENSLER, Alexander, 91466 Gerhardshofen (DE); OSCHMANN, Philipp, 91058 Erlangen (DE)
(74) Vertreter: Siemens Patent Attorneys
(86) Internationale Anmeldenummer: PCT/EP2019/075111
(87) Internationale Veröffentlichungsnummer: WO 2020/088840

(56) Entgegenhaltungen:
- EP-A1- 2 533 409
- EP-A1- 2 533 409
- DEHGHANI TAFTI HOSSEIN ET AL: "Control of active front-end rectifier of the solid-state transformer with improved dynamic performance during precharging", 2017 ASIAN CONFERENCE ON ENERGY, POWER AND TRANSPORTATION ELECTRIFICATION (ACEPT), IEEE, 24. Oktober 2017 (2017-10-24), Seiten 1-6, XP033263691, DOI: 10.1109/ACEPT.2017.8168622
- DEHGHANI TAFTI HOSSEIN ET AL: "Control of active front-end rectifier of the solid-state transformer with improved dynamic performance during precharging", 2017 ASIAN CONFERENCE ON ENERGY, POWER AND TRANSPORTATION ELECTRIFICATION (ACEPT), IEEE, 24 October 2017 (2017-10-24), pages 1-6, XP033263691, DOI: 10.1109/ACEPT.2017.8168622 [retrieved on 2017-12-05]

## Beschreibung

Die vorliegende Erfindung geht aus von einem Frequenzumrichter,
- wobei der Frequenzumrichter eingangsseitig einen Gleichrichter und mindestens einen dem Gleichrichter nachgeordneten Stützkondensator aufweist,
- wobei der Gleichrichter mehrere Halbbrücken aufweist, über welche eine jeweilige eingangsseitige Phase des Gleichrichters den Stützkondensator speist,
- wobei die Halbbrücken aktive Schaltelemente aufweisen, so dass der Gleichrichter als rückspeisefähiger Umrichter ausgebildet ist,
- wobei die eingangsseitigen Phasen des Gleichrichters über eine Vorschaltung mit netzseitigen Phasen eines mehrphasigen Versorgungsnetzes verbindbar sind,
- wobei die netzseitigen Phasen innerhalb der Vorschaltung über einen jeweiligen Phasenkondensator mit jeweils einer der eingangsseitigen Phasen verbindbar sind.

Netzgespeiste Frequenzumrichter benötigen zwischen dem Versorgungsnetz und dem eingangsseitigen Gleichrichter des Frequenzumrichters in der Regel sowohl eine Filterschaltung als auch eine Vorladeschaltung. Die Filterschaltung dient dazu, Netzrückwirkungen zu begrenzen. Die Vorladeschaltung wird nur beim Anschalten des Frequenzumrichters an das Versorgungsnetz benötigt. Sie dient dazu, den Vorladestrom, mit dem der Stützkondensator aufgeladen wird, zu begrenzen. Sobald der Stützkondensator aufgeladen ist, kann die Strombegrenzung beendet werden. Zu diesem Zweck kann die Vorladeschaltung beispielsweise mittels eines Relais überbrückt werden.

Eine einfache und weitverbreitete Vorladeschaltung besteht darin, in den Leitungen von den netzseitigen Phasen des Versorgungsnetzes zu den eingangsseitigen Phasen des Gleichrichters jeweils einen Widerstand anzuordnen, der nach dem Vorladen des Stützkondensators mittels eines Schaltkontakts eines Relais überbrückt wird. Diese Vorladeschaltung weist den Nachteil auf, dass beim Vorladen in den Widerständen hohe Verlustleistungen anfallen und damit eine deutliche Erwärmung der Widerstände auftritt. Insbesondere in Fällen, in denen die Kapazität des Stützkondensators groß ist, müssen auch die Widerstände voluminös ausgelegt werden. Alternativ können auch die Widerstandswerte relativ groß gewählt werden. In diesem Fall erhöht sich aber die zum Vorladen benötigte Zeit. Weiterhin ist ein wiederholtes Vorladen oftmals nur in begrenztem Umfang möglich, da die Widerstände relativ lange benötigen, um sich wieder abzukühlen.

Es ist alternativ bekannt, zum Vorladen des Stützkondensators eigene Leistungshalbleiter zu verwenden. Diese Vorgehensweise ist jedoch schaltungstechnisch aufwendig und kostenintensiv.

Aus der EP 2 533 409 A1 ist ein Frequenzumrichter der eingangs genannten Art bekannt. Bei diesen Frequenzumrichter sind in den Leitungen, in denen die Phasenkondensatoren angeordnet sind, zusätzlich Schalter angeordnet. Die Phasenkondensatoren dienen daher nicht der Filterung, sondern der Begrenzung des Ladestroms. Zusätzlich sind Filterkondensatoren vorhanden, die zwischen je zwei der netzseitigen bzw. eingangsseitigen Phasen angeordnet sind.

Der aus der EP 2 533 409 A1 bekannte Frequenzumrichter ist insofern gegenüber den Frequenzumrichtern des konventionellen Standes der Technik von Vorteil, weil beim Vorladen nur noch geringe Verlustleistungen auftreten. Jedoch ist das Gesamtvolumen immer noch groß, weil sowohl die Vorladeschaltung als auch die Filterschaltung benötigt werden. Auch die Kosten sind dementsprechend immer noch hoch. Weiterhin wird zum Vorladen des Stützkondensators eine relativ große Zeit benötigt.

Aus dem Fachaufsatz "Control of Active Front-End Rectifier of the Solid-State Transformer with Improved Dynamic Performance during Recharging" von H. D. Tafti et al., ist ein Frequenzumrichter bekannt, der eingangsseitig einen Gleichrichter und einen dem Gleichrichter nachgeordneten Stützkondensator aufweist. Der Gleichrichter weist Halbbrücken auf, über welche eingangsseitige Phasen des Gleichrichters den Stützkondensator speisen. Die Halbbrücken weisen aktive Schaltelemente auf, so dass der Gleichrichter als rückspeisefähiger Umrichter ausgebildet ist. Die eingangsseitigen Phasen des Gleichrichters sind über eine Vorschaltung mit den netzseitigen Phasen eines Versorgungsnetzes verbunden. Der Frequenzumrichter weist eine Steuereinrichtung auf, welche ab Erreichen eines ersten Ladezustands des Stützkondensators die aktiven Schaltelemente ansteuert, so dass der Stützkondensator mit einer konstanten Laderate weiter geladen wird.

Die Aufgabe der vorliegenden Erfindung besteht darin, einen Frequenzumrichter der eingangs genannten Art derart auszugestalten, dass das Vorladen in relativ kurzer Zeit erfolgen kann.

Die Aufgabe wird durch einen Frequenzumrichter mit den Merkmalen des Anspruchs 1 gelöst. Vorteilhafte Ausgestaltungen des Frequenzumrichters sind Gegenstand der abhängigen Ansprüche 2 bis 5.

Erfindungsgemäß wird ein Frequenzumrichter der eingangs genannten Art dadurch ausgestaltet, dass der Frequenzumrichter eine Steuereinrichtung aufweist, welche ab Erreichen eines ersten Ladezustands des Stützkondensators die aktiven Schaltelemente derart ansteuert, dass über die aktiven Schaltelemente an die eingangsseitigen Phasen eingangsseitige Phasenspannungen angelegt werden, die gegenläufig zu denjenigen netzseitigen Phasenspannungen verlaufen, die an denjenigen netzseitigen Phasen anliegen, mit der die eingangsseitigen Phasen über die Phasenkondensatoren verbunden sind.

Dadurch können die wirksamen Potenzialdifferenzen auf den beiden Seiten der Phasenkondensatoren vergrößert werden, so dass die Phasenkondensatoren pro Periode der Netzspannung mehr Ladung auf den Stützkondensator fördern.

In einer bevorzugten Ausgestaltung ist vorgesehen,
- dass die netzseitigen Phasen innerhalb der Vorschaltung zusätzlich über einen jeweiligen Schalter unmittelbar mit jeweils einer anderen der eingangsseitigen Phasen verbunden sind, so dass die netzseitigen Phasen bei geschlossenen Schaltern mit den eingangsseitigen Phasen kurzgeschlossen sind und die Phasenkondensatoren jeweils zwei netzseitige Phasen bzw. zwei eingangsseitige Phasen miteinander verbinden, und
- dass die Steuereinrichtung die Schalter beim Vorladen des Stützkondensators geöffnet hält und bei Erreichen eines vorbestimmten zweiten Ladezustands des Stützkondensators, der während des Vorladens des Stützkondensators nach dem ersten Ladezustand angenommen wird, schließt.

Dadurch können auf einfache Weise ein und dieselben Kondensatoren - nämlich die Phasenkondensatoren - einerseits beim Vorladen die Strombegrenzung realisieren und andererseits beim Normalbetrieb als Filterkondensatoren der Stromfilterung wirken.

Das Vertauschen der miteinander verbundenen netzseitigen und eingangsseitigen Phasen stellt kein großes Problem dar. Insbesondere kann die Ansteuerung der aktiven Schaltelemente auf einfache Weise durch die Steuereinrichtung entsprechend angepasst werden. Denn es muss lediglich die Zuordnung der einzelnen Steuersignale zu den aktiven Schaltelementen angepasst werden. Die Ansteuerung als solche kann unverändert erhalten bleiben.

Vorzugsweise ist in diesem Fall der Frequenzumrichter derart ausgebildet, dass die Steuereinrichtung bei Erreichen des vorbestimmten zweiten Ladezustands
- zunächst die aktiven Schaltelemente derart ansteuert, dass über die aktiven Schaltelemente an die eingangsseitigen Phasen eingangsseitige Phasenspannungen angelegt werden, die in Amplitude und Phase mit denjenigen netzseitigen Phasenspannungen korrespondieren, die an denjenigen netzseitigen Phasen anliegen, mit denen die eingangsseitigen Phasen über die Phasenkondensatoren verbunden sind,
- sodann die aktiven Schaltelemente derart ansteuert, dass die über die aktiven Schaltelemente an die eingangsseitigen Phasen angelegten eingangsseitigen Phasenspannungen stetig in diejenigen netzseitigen Phasenspannungen überführt werden, die an denjenigen netzseitigen Phasen anliegen, mit denen die eingangsseitigen Phasen über die Schalter verbunden sind, und
- die Schalter erst nach dem Überführen der eingangsseitigen Phasenspannungen in diejenigen netzseitigen Phasenspannungen, die an denjenigen netzseitigen Phasen anliegen, mit denen die eingangsseitigen Phasen über die Schalter verbunden sind, schließt.

Dadurch ist es möglich, Stromspitzen und Spannungssprünge, die anderenfalls beim Schließen der Schalter auftreten könnten, deutlich zu reduzieren.

Vorzugsweise weist die Vorladeschaltung in Leitungen zu den netzseitigen Phasen und/oder zu den eingangsseitigen Phasen hin Induktivitäten auf. Durch diese Ausgestaltung kann eine besonders einfache und effektive Filterung bewirkt werden.

Vorzugsweise sind die Induktivitäten derart in den Leitungen angeordnet, dass sie sowohl bei geöffneten als auch bei geschlossenen Schaltern von den aus dem Versorgungsnetz eingespeisten und/oder über die Halbbrücken fließenden Phasenströmen durchflossen werden. Dadurch gestaltet sich die Implementierung der Kombination der beiden Wirkungen der Phasenkondensatoren - nämlich einmal zur Filterung und einmal zur Strombegrenzung - besonders einfach und effektiv.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Frequenzumrichter,
- FIG 2: eine Netzanbindung, eine Vorschaltung und einen eingangsseitigen Gleichrichter,
- FIG 3: ein Ablaufdiagramm,
- FIG 4: ein Zeitdiagramm und
- FIG 5: ein weiteres Zeitdiagramm.

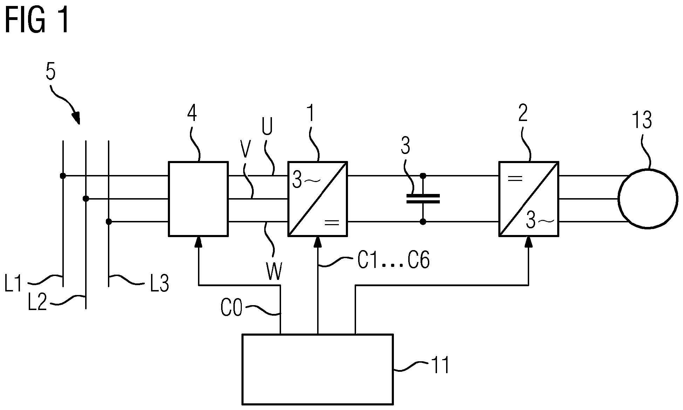

Gemäß FIG 1 weist ein Frequenzumrichter eingangsseitig einen Gleichrichter 1 auf. Dem Gleichrichter 1 ist ausgangsseitig eine weitere Einrichtung 2 nachgeordnet. Der Frequenzumrichter weist weiterhin mindestens einen Stützkondensator 3 auf, der zwischen dem Gleichrichter 1 und der weiteren Einrichtung 2 angeordnet ist. Die weitere Einrichtung ist oftmals als Wechselrichter ausgebildet. In diesem Fall spricht man von einem Zwischenkreisumrichter. Die weitere Einrichtung kann aber auch andersartig ausgebildet sein, beispielsweise als Gleichspannungsverbraucher, als Gleichspannungsnetz, als Photovoltaikanlage oder als Energiespeicher.

Der Gleichrichter 1 weist eingangsseitig Phasen U, V, W auf, die über eine Vorschaltung 4 mit Phasen L1, L2, L3 eines Versorgungsnetzes 5 verbunden ist. Sowohl der Gleichrichter 1 als auch das Versorgungsnetz 5 sind somit mehrphasig, weisen also jeweils mehrere Phasen U, V, W bzw. L1, L2, L3 auf. Die Phasen U, V, W des Gleichrichters 1 werden nachfolgend zur sprachlichen Unterscheidung von den Phasen L1, L2, L3 des Versorgungsnetzes 5 als eingangsseitige Phasen U, V, W bezeichnet. Ebenso werden zur sprachlichen Unterscheidung von den eingangsseitigen Phasen U, V, W des Gleichrichters 1 die Phasen L1, L2, L3 des Versorgungsnetzes 5 als netzseitige Phasen L1, L2, L3 bezeichnet.

Die Anzahl an eingangsseitigen Phasen U, V, W ist in der Regel drei. Unabhängig von der Anzahl an eingangsseitigen Phasen U, V, W ist die Anzahl an eingangsseitigen Phasen U, V, W jedoch gleich der Anzahl an netzseitigen Phasen L1, L2, L3.

Es ist möglich, dass die netzseitige Phase L1 der netzseitigen Phase L2 um 120° elektrisch voreilt und ebenso die netzseitige Phase L2 der netzseitigen Phase L3 um 120° elektrisch voreilt und die netzseitige Phase L3 der netzseitigen Phase L1 um 120° elektrisch voreilt. Vorzugsweise ist es jedoch umgekehrt, dass also die netzseitige Phase L1 der netzseitigen Phase L2 um 120° elektrisch nacheilt und ebenso die netzseitige Phase L2 der netzseitigen Phase L3 um 120° elektrisch nacheilt und die netzseitige Phase L3 der netzseitigen Phase L1 um 120° elektrisch nacheilt.

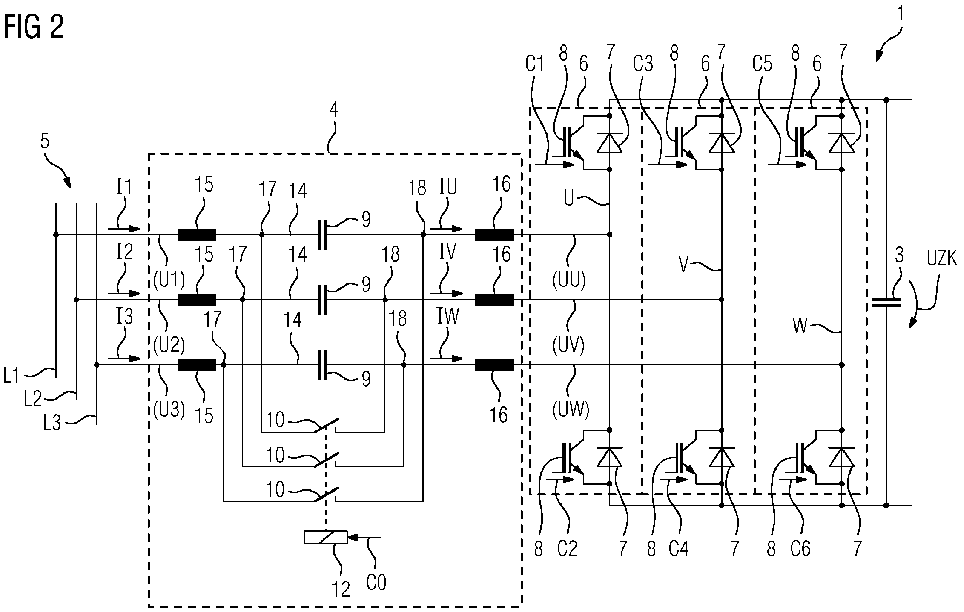

Der Gleichrichter 1 weist entsprechend der Darstellung in FIG 2 mehrere Halbbrücken 6 auf. Über jede der Halbbrücken 6 speist jeweils eine der eingangsseitigen Phasen U, V, W des Gleichrichters 1 den Stützkondensator 3. Die Halbbrücken 6 weisen entsprechend der Darstellung in FIG 2 Dioden 7 auf. Weiterhin weisen sie den Dioden 7 parallel geschaltete aktive Schaltelemente 8 auf. Die Schaltelemente 8 sind elektronische Halbleiterschalter, beispielsweise MOSFETs. Aufgrund der aktiven Schaltelemente 8 ist der Gleichrichter 1 rückspeisefähig. Sie werden über entsprechende Steuersignale C1 bis C6 angesteuert. Es ist möglich, dass die Dioden 7 eigenständige Bauteile sind. Alternativ ist es möglich, dass die Dioden 7 integrierte Bestandteile der aktiven Schaltelemente 8 sind.

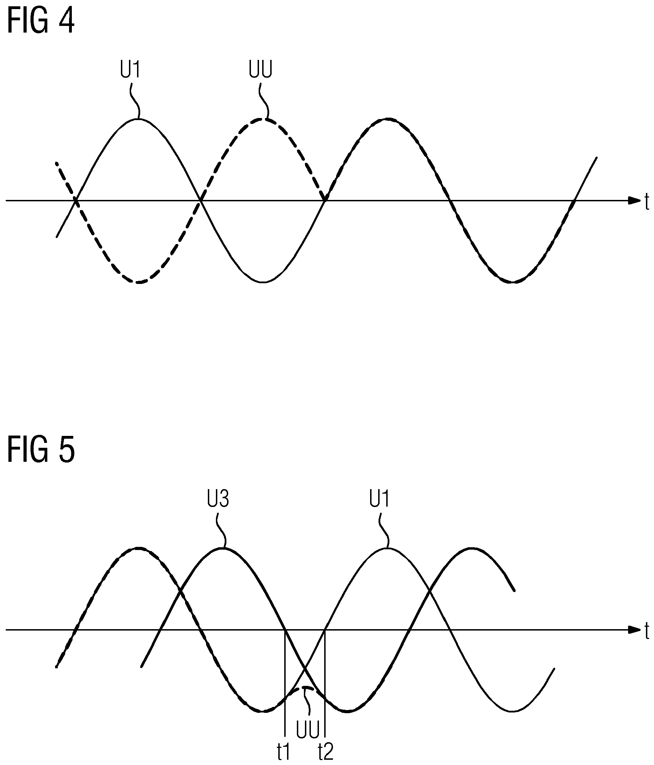

Die netzseitigen Phasen L1, L2, L3 sind entsprechend der Darstellung in FIG 2 innerhalb der Vorschaltung 4 über einen jeweiligen Kondensator 9 mit jeweils einer der eingangsseitigen Phasen U, V, W verbunden. Konkret ist über jeweils einen der Kondensatoren 9 die netzseitige Phase L1 mit der eingangsseitigen Phase U verbunden, die netzseitige Phase L2 mit der eingangsseitigen Phase V und die netzseitige Phase L3 mit der eingangsseitigen Phase W. Es sind aber auch andere Ausgestaltungen möglich. Insbesondere kann die Vorschaltung 4 auch so ausgebildet sein, wie dies in FIG 5 der EP 2 533 409 A1 dargestellt ist. Die Kondensatoren 9 werden nachfolgend zur sprachlichen Unterscheidung vom Stützkondensator 3 als Phasenkondensatoren 9 bezeichnet.

Weiterhin sind die netzseitigen Phasen L1, L2, L3 innerhalb der Vorschaltung 4 über einen jeweiligen Schalter 10 mit jeweils einer der eingangsseitigen Phasen U, V, W verbunden. Vorzugsweise sind hierbei entsprechend der Darstellung in FIG 2 die netzseitigen Phasen L1, L2, L3 - bezogen auf die eingangsseitigen Phasen U, V, W, mit denen die netzseitigen Phasen L1, L2, L3 über die Phasenkondensatoren 9 verbunden sind - über je einen der Schalter 10 mit je einer anderen der eingangsseitigen Phasen U, V, W verbunden. Konkret ist über jeweils einen der Schalter 10 die netzseitige Phase L1 mit der eingangsseitigen Phase V verbunden, die netzseitige Phase L2 mit der eingangsseitigen Phase W und die netzseitige Phase L3 mit der eingangsseitigen Phase U. Die Verbindung der netzseitigen Phase L1 mit der eingangsseitigen Phase V, der netzseitigen Phase L2 mit der eingangsseitigen Phase W und der netzseitigen Phase L3 mit der eingangsseitigen Phase U ist unmittelbar. Wenn die Schalter 10 geschlossen sind, sind die netzseitigen Phasen L1, L2, L3 mit den eingangsseitigen Phasen U, V, W also kurzgeschlossen. Die Phasenkondensatoren 9 verbinden im Falle der Ausgestaltung gemäß FIG 2 jeweils zwei netzseitige Phasen L1, L2, L3 bzw. zwei eingangsseitige Phasen U, V, W miteinander. Insbesondere werden vorzugsweise über je einen der Phasenkondensatoren 9 verbunden
- die netzseitige Phase L1 und die eingangsseitige Phase V (die in diesem Fall über einen der Schalter 10 miteinander kurzgeschlossen sind) mit der netzseitigen Phase L2 und der eingangsseitigen Phase W (die in diesem Fall über einen anderen der Schalter 10 miteinander kurzgeschlossen sind),
- die netzseitige Phase L1 und die eingangsseitige Phase V mit der netzseitigen Phase L3 und der eingangsseitigen Phase U (die in diesem Fall ebenfalls über einen weiteren der Schalter 10 miteinander kurzgeschlossen sind) und
- die netzseitige Phase L2 und die eingangsseitige Phase W mit der netzseitigen Phase L3 und der eingangsseitigen Phase U.

Der Frequenzumrichter weist gemäß FIG 1 weiterhin eine Steuereinrichtung 11 auf. Die Steuereinrichtung 11 generiert insbesondere die Steuersignale C1 bis C6. Weiterhin hält die Steuereinrichtung 11 beim Vorladen des Stützkondensators 3 die Schalter 10 geöffnet. Dadurch wird der Stützkondensator 3 über die Phasenkondensatoren 9 langsam aufgeladen. Das Halten der Schalter 10 im geöffneten Zustand kann beispielsweise dadurch erfolgen, dass ein Relais 12, welches die Schalter 10 betätigt, von der Steuereinrichtung 11 nicht mit Strom beaufschlagt wird. Zu einem späteren Zeitpunkt schließt die Steuereinrichtung 11 jedoch die Schalter 10. Ein entsprechendes Steuersignal beispielsweise für das Relais 12 ist in FIG 2 mit C0 bezeichnet. In diesem Zustand - also bei geschlossenen Schaltern 10 - erfolgt der Normalbetrieb des Frequenzumrichters. Im Normalbetrieb wird von der Steuereinrichtung 11 insbesondere auch die weitere Einrichtung 2 angesteuert. Beispielsweise kann entsprechend der Darstellung in FIG 1 über einen Wechselrichter eine Last 13 mit elektrischer Energie versorgt werden. Der genannte Zustand kann beispielsweise dadurch definiert sein, dass eine über dem Stützkondensator 3 abfallende Stützspannung UZK einen vorbestimmten Prozentsatz ihres Sollwertes erreicht hat, beispielsweise mindestens 90 %.

In den FIG 1 und 2 - insbesondere in FIG 2 - ist auch eine Reihe von vorteilhaften Ausgestaltungen dargestellt. Insbesondere kann die Vorschaltung 4 in Leitungen 14 zu den netzseitigen Phasen L1, L2, L3 hin Induktivitäten 15 aufweisen. Falls die Induktivitäten 15 vorhanden sind, sind sie in den Leitungen 14 vorzugsweise derart angeordnet, dass sie sowohl bei geöffneten als auch bei geschlossenen Schaltern 10 von den aus dem Versorgungsnetz 5 eingespeisten Phasenströmen I1, I2, I3 (netzseitige Phasenströme I1, I2, I3) durchflossen werden. Alternativ oder zusätzlich kann die Vorschaltung 4 in den Leitungen 14 zu den eingangsseitigen Phasen U, V, W hin Induktivitäten 16 aufweisen. Falls die Induktivitäten 16 vorhanden sind, sind sie in den Leitungen 14 vorzugsweise derart angeordnet, dass sie sowohl bei geöffneten als auch bei geschlossenen Schaltern 10 von den über die Halbbrücken 6 fließenden Phasenströmen IU, IV, IW (eingangsseitige Phasenströme IU, IV, IW) durchflossen werden. Knotenpunkte 17, 18, an welchen die Schalter 10 an die Leitungen 14 angeschlossen sind, sind also zwischen den Phasenkondensatoren 9 und den Induktivitäten 15, 16 angeordnet.

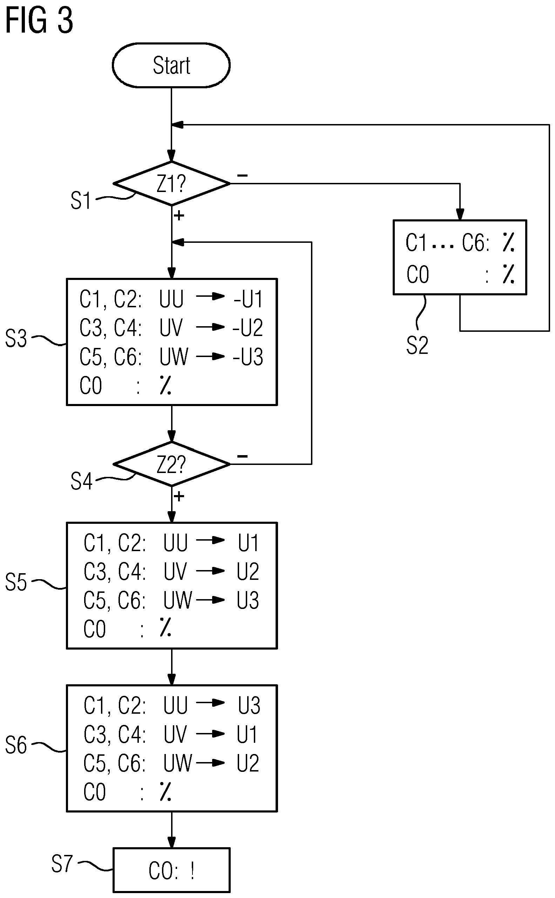

Die Betriebsweise des Frequenzumrichters wird nachstehend in Verbindung mit FIG 3 erläutert. In diesem Zusammenhang werden weiterhin zwei weitere vorteilhafte Ausgestaltungen erläutert. Diese Ausgestaltungen bauen aufeinander auf. Sie sind jedoch unabhängig davon realisierbar, ob in den Leitungen 14 Induktivitäten 15, 16 angeordnet sind oder nicht.

Zunächst wird die prinzipielle erfindungsgemäße Gestaltung erläutert.

Gemäß FIG 3 prüft die Steuereinrichtung 11 beim Anschalten des Gleichrichters 1 an das Versorgungsnetz 5 in einem Schritt S1, ob der Stützkondensator 3 einen Ladezustand 21 erreicht, nachfolgend als erster Ladezustand 21 bezeichnet. Insbesondere kann die Steuereinrichtung 11 im Schritt S1 prüfen, ob die Stützspannung UZK einen geeigneten, vorbestimmten Wert erreicht oder überschreitet, beispielsweise einen Wert zwischen 30 % und 70 %, insbesondere 40 % bis 60 %, des Sollwertes der Stützspannung UZK.

Solange dies nicht der Fall ist, geht die Steuereinrichtung 4 über einen Schritt S2 zum Schritt S1 zurück. Im Schritt S2 hält die Steuereinrichtung 11 sowohl die Schalter 10 offen als auch die aktiven Schaltelemente 8. Dies ist in FIG 3 dadurch angedeutet, dass keine Ausgabe (angedeutet durch das Zeichen "./.") der Steuersignale C0 bis C6 erfolgt.

Wenn der Stützkondensator 3 den ersten Ladezustand 21 erreicht, steuert die Steuereinrichtung 11 in einem Schritt S3 die aktiven Schaltelemente 8 an. Die Ansteuerung ist derart, dass über die aktiven Schaltelemente 8, über welche die eingangsseitige Phase U geschaltet wird, dem entsprechenden Phasenkondensator 9 eine eingangsseitige Phasenspannung UU zugeführt wird, welche gegenläufig (gegenphasig) zur netzseitigen Phasenspannung U1 verläuft. FIG 4 zeigt in ihrem linken Bereich den zugehörigen Verlauf der netzseitigen Phasenspannung U1 und der eingangsseitigen Phasenspannung UU als Funktion der Zeit t.

In analoger Weise steuert die Steuereinrichtung 11 die aktiven Schaltelemente 8, über welche die eingangsseitige Phase V geschaltet wird, derart an, dass dem entsprechenden Phasenkondensator 9 eine eingangsseitige Phasenspannung UV zugeführt wird, welche gegenläufig (gegenphasig) zur netzseitigen Phasenspannung U2 verläuft. Ebenso steuert die Steuereinrichtung 11 die aktiven Schaltelemente 8, über welche die eingangsseitige Phase W geschaltet wird, derart an, dass dem entsprechenden Phasenkondensator 9 eine eingangsseitige Phasenspannung UW zugeführt wird, welche gegenläufig (gegenphasig) zur netzseitigen Phasenspannung U3 verläuft. Dadurch liegt an den Phasenkondensatoren 9 eine relativ große Potenzialdifferenz an, so dass in den Leitungen 14 relativ große Phasenströme I1, I2, I3, IU, IV, IW fließen. Der Stützkondensator 3 wird dadurch schnell geladen. Da sich die netzseitigen Phasenspannungen U1, U2, U3 zeitlich ändern, ändern sich weiterhin auch die eingangsseitigen Phasenspannungen UU, UV, UW. Die Ansteuerung der aktiven Schaltelemente 8 muss diesen Bedingungen genügen. Die entsprechende Ermittlung der Ansteuerung der aktiven Schaltelemente 8 ist Fachleuten jedoch allgemein bekannt und muss daher nicht detailliert erläutert werden.

Während des Vorladens des Stützkondensators 3 wird - aber erst nach dem ersten Ladezustand 21 - ein zweiter Ladezustand Z2 angenommen. Der zweite Ladezustand Z2 kann, wie bereits erwähnt, beispielsweise dadurch definiert sein, dass die über dem Stützkondensator 3 abfallende Stützspannung UZK einen vorbestimmten Prozentsatz ihres Sollwertes erreicht hat, beispielsweise mindestens 90 %. Die Steuereinrichtung 11 prüft daher in einem Schritt S4, ob der Stützkondensator 3 den zweiten Ladezustand 22 erreicht. Solange dies nicht der Fall ist, geht die Steuereinrichtung 4 zum Schritt S3 zurück.

Mit dem Erreichen des zweiten Ladezustandes 22 ist das Grundprinzip der vorliegenden Erfindung abgeschlossen. Sofern der zweite Ladezustand 22 entsprechend bestimmt ist - insbesondere die über dem Stützkondensator 3 abfallende Stützspannung UZK einen hinreichend hohen Prozentsatz ihres Sollwertes erreicht hat - und die Vorschaltung 4 entsprechend ausgelegt ist, kann direkt zum Normalbetrieb (siehe später einen Schritt S7) übergegangen werden. FIG 2 zeigt aber auch zwei vorteilhafte Ausgestaltungen. Diese werden nachfolgend in Kombination erläutert. Dies geschieht, weil die beiden Ausgestaltungen aufeinander aufbauen. Insbesondere betreffen sie Maßnahmen, die kurz vor und unmittelbar vor dem Schließen der Schalter 10 ergriffen werden.

In diesem Fall entspricht der zweite Ladezustand 22 nur einer Teilladung des Stützkondensators 3. Beispielsweise kann, wie bereits erwähnt, gefordert sein, dass die über dem Stützkondensator 3 abfallende Stützspannung UZK einen vorbestimmten Prozentsatz ihres Sollwertes erreicht hat, beispielsweise mindestens 90 %.

Im Rahmen dieser vorteilhaften Ausgestaltung schließt die Steuereinrichtung 11 den Schalter 10 noch nicht sofort, sondern geht zuvor zu einem Schritt S5 über. Im Schritt S5 steuert die Steuereinrichtung 11 die aktiven Schaltelemente 8 für die Phase U derart an, dass über die zugehörigen aktiven Schaltelemente 8 an die eingangsseitige Phase U eine eingangsseitige Phasenspannung UU angelegt wird, die in Amplitude und Phase mit der netzseitigen Phasenspannung U1 korrespondiert. FIG 4 zeigt in ihrem rechten Bereich den zugehörigen Verlauf der Phasenspannung U1 und der Phasenspannung UU als Funktion der Zeit t. FIG 5 zeigt in ihrem linken Bereich ebenfalls den zugehörigen Verlauf der Phasenspannung U1 und der Phasenspannung UU als Funktion der Zeit t.

FIG 4 zeigt zugleich auch, auf welche Art und Weise das Umschalten von dem gegenläufigen Verlauf (linker Bereich) zum gleichphasigen Verlauf (rechter Bereich) erfolgt. Denn vorzugsweise erfolgt, so wie in FIG 4 dargestellt, das Umschalten bei einem Nulldurchgang der Phasenspannungen U1, UU.

In analoger Weise erfolgt im Schritt S5 auch das Umschalten der Phasenspannung UV der eingangsseitigen Phase V von einem zum Verlauf der Phasenspannung U2 gegenläufigen Verlauf zu einem zum Verlauf der Phasenspannung U2 gleichphasigen Verlauf. Gleiches gilt für das Umschalten der Phasenspannung UW der eingangsseitigen Phase W von einem zum Verlauf der Phasenspannung U3 gegenläufigen Verlauf zu einem zum Verlauf der Phasenspannung U3 gleichphasigen Verlauf.

Sodann steuert die Steuereinrichtung 11 in einem Schritt S6 die aktiven Schaltelemente 8 für die Phase U derart an, dass über die zugehörigen aktiven Schaltelemente 8 an die eingangsseitige Phase U eine eingangsseitige Phasenspannung UU angelegt wird, die in Amplitude und Phase mit der netzseitigen Phasenspannung U3 korrespondiert. Hierbei erfolgt entsprechend der Darstellung in FIG 5 ein stetiges Überführen. Dies kann beispielsweise dadurch erreicht werden, dass entsprechend der Darstellung in FIG 5 ab einem Zeitpunkt t1 ein bestimmter Spannungswert der eingangsseitigen Phasenspannung UU konstant gehalten wird, bis die netzseitige Phasenspannung U3 zu einem Zeitpunkt t2 diesen bestimmten Spannungswert erreicht. Ab dem Erreichen des bestimmten Spannungswertes folgt die Phasenspannung UU sodann der netzseitigen Phasenspannung U3.

In analoger Weise erfolgt im Schritt S6 auch das Umschalten der Phasenspannung UV der eingangsseitigen Phase V von einem zum Verlauf der Phasenspannung U2 gleichphasigen Verlauf zu einem zum Verlauf der Phasenspannung U1 gleichphasigen Verlauf. Gleiches gilt für das Umschalten der Phasenspannung UW der eingangsseitigen Phase W von einem zum Verlauf der Phasenspannung U3 gleichphasigen Verlauf zu einem zum Verlauf der Phasenspannung U2 gleichphasigen Verlauf.

Es ist möglich, die soeben erläuterte Überführung der Phasenspannungen UU, UV, UW gleichzeitig durchzuführen. Insbesondere in diesem Fall zeigt sich der Vorteil, wenn die netzseitige Phase L1 der netzseitigen Phase L2 um 120° elektrisch nacheilt und ebenso die netzseitige Phase L2 der netzseitigen Phase L3 um 120° elektrisch nacheilt und die netzseitige Phase L3 der netzseitigen Phase L1 um 120° elektrisch nacheilt. Denn dadurch muss die jeweilige eingangsseitige Phasenspannung UU, UV, UW nur für ein Drittel einer Periode der netzseitigen Phasenspannungen U1, U2, U3 auf einem konstanten Wert gehalten werden. Anderenfalls müssten die eingangsseitigen Phasenspannungen UU, UV, UW für zwei Drittel einer Periode der netzseitigen Phasenspannungen U1, U2, U3 auf einem konstanten Wert gehalten werden.

Die einzelnen eingangsseitigen Phasen U, V, W sind über die entsprechenden Halbbrücken 6 unabhängig voneinander steuerbar. Es ist daher alternativ möglich, die soeben erläuterte Überführung der Phasenspannungen UU, UV, UW nacheinander durchzuführen. In diesem Fall ist es sogar möglich, eine direkte, unmittelbare (abrupte) Umschaltung der eingangsseitigen Phasenspannungen UU, UV, UW von einem mit einer der netzseitigen Phasenspannungen U1, U2, U3 gleichphasigen Verlauf zu einem mit einer anderen der netzseitigen Phasenspannungen U1, U2, U3 gleichphasigen Verlauf vorzunehmen, ohne einen Spannungssprung zu bewirken und damit die Umschaltung nach wie vor stetig durchzuführen. In diesem Fall muss jedoch beispielsweise für die Phase U das Umschalten zu einem Zeitpunkt erfolgen, zu dem die netzseitigen Phasenspannungen U1 und U3 den gleichen Wert aufweisen. In analoger Weise muss in diesem Fall das Umschalten für die Phase V zu einem Zeitpunkt erfolgen, zu dem die netzseitigen Phasenspannungen U1 und U2 den gleichen Wert aufweisen. Ebenso muss in diesem Fall das Umschalten für die Phase W zu einem Zeitpunkt erfolgen, zu dem die netzseitigen Phasenspannungen U2 und U3 den gleichen Wert aufweisen.

Nach der soeben erläuterten Überführung der Phasenspannungen UU, UV, UW schließt die Steuereinrichtung 11 in einem Schritt S7 die Schalter 10. Das Schließen der Schalter 10 sollte so bald wie möglich nach dem Zeitpunkt t2 erfolgen. Mit dem Schließen der Schalter 10 ist das Vorladen des Stützkondensators 3 und damit des Frequenzumrichters insgesamt abgeschlossen. Es folgt der normale Betrieb, bei dem die weitere Einrichtung 2 in üblicher Weise betrieben wird. Zum Schließen der Schalter 10 kann die Steuereinrichtung 11 beispielsweise das Relais 12 derart ansteuern, dass die Schalter 10 geschlossen werden.

Zusammengefasst betrifft die vorliegende Erfindung somit folgenden Sachverhalt:
Ein Frequenzumrichter weist eingangsseitig einen Gleichrichter 1 und mindestens einen dem Gleichrichter 1 nachgeordneten Stützkondensator 3 auf. Der Gleichrichter 1 weist mehrere Halbbrücken 6 auf, über welche eine jeweilige eingangsseitige Phase U, V, W des Gleichrichters 1 den Stützkondensator 3 speist. Die Halbbrücken 6 weisen aktive Schaltelemente 8 auf, so dass der Gleichrichter 1 als rückspeisefähiger Umrichter ausgebildet ist. Die eingangsseitigen Phasen U, V, W sind über eine Vorschaltung 4 mit netzseitigen Phasen L1, L2, L3 eines mehrphasigen Versorgungsnetzes 5 verbunden. Die netzseitigen Phasen L1, L2, L3 sind innerhalb der Vorschaltung 4 über einen jeweiligen Phasenkondensator 9 mit jeweils einer der eingangsseitigen Phasen U, V, W verbunden. Eine Steuereinrichtung 11 des Frequenzumrichters steuert ab Erreichen eines ersten Ladezustands 21 des Stützkondensators 3 die aktiven Schaltelemente 8 derart an, dass über die aktiven Schaltelemente 8 an die eingangsseitigen Phasen U, V, W eingangsseitige Phasenspannungen UU, UV, UW angelegt werden, die gegenläufig zu denjenigen netzseitigen Phasenspannungen U1, U2, U3 verlaufen, die an denjenigen netzseitigen Phasen L1, L2, L3 anliegen, mit der die eingangsseitigen Phasen U, V, W über die Phasenkondensatoren 9 verbunden sind.

Die vorliegende Erfindung weist viele Vorteile auf. Insbesondere ist ein schnelles und verlustarmes Vorladen des Stützkondensators 3 möglich. Weiterhin vereinfacht sich die Vorschaltung 4 erheblich. Insbesondere können gegenüber dem Stand der Technik dort erforderliche Vorladewiderstände und Vorladekondensatoren eingespart werden. Der erfindungsgemäße Frequenzumrichter kann daher erheblich kostengünstiger als Frequenzumrichter des Standes der Technik realisiert werden. Insbesondere die Kosten der Vorschaltung 4 können gegenüber dem Stand der Technik um mehr als 50 % reduziert werden. Die für die Phasenkondensatoren 9 erforderlichen Kapazitätswerte können derart abgestimmt werden, dass sich sowohl eine schnelle Vorladung als auch eine gute Filterung ergeben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Frequenzumrichter,
- wobei der Frequenzumrichter eingangsseitig einen Gleichrichter (1) und mindestens einen dem Gleichrichter (1) nachgeordneten Stützkondensator (3) aufweist,
- wobei der Gleichrichter (1) mehrere Halbbrücken (6) aufweist, über welche eine jeweilige eingangsseitige Phase (U, V, W) des Gleichrichters (1) den Stützkondensator (3) speist,
- wobei die Halbbrücken (6) aktive Schaltelemente (8) aufweisen, so dass der Gleichrichter (1) als rückspeisefähiger Umrichter ausgebildet ist,
- wobei die eingangsseitigen Phasen (U, V, W) des Gleichrichters (1) über eine Vorschaltung (4) mit netzseitigen Phasen (L1, L2, L3) eines mehrphasigen Versorgungsnetzes (5) verbindbar sind,
- wobei die netzseitigen Phasen (L1, L2, L3) innerhalb der Vorschaltung (4) über einen jeweiligen Phasenkondensator (9) mit jeweils einer der eingangsseitigen Phasen (U, V, W) verbindbar sind,
**dadurch gekennzeichnet,**
**dass** der Frequenzumrichter eine Steuereinrichtung (11) aufweist, welche dazu eingerichtet ist, ab Erreichen eines ersten Ladezustands (Z1) des Stützkondensators (3) die aktiven Schaltelemente (8) derart anzusteuern, dass über die aktiven Schaltelemente (8) an die eingangsseitigen Phasen (U, V, W) eingangsseitige Phasenspannungen (UU, UV, UW) angelegt werden, die gegenläufig zu denjenigen netzseitigen Phasenspannungen (U1, U2, U3) verlaufen, die an denjenigen netzseitigen Phasen (L1, L2, L3) anliegen, mit der die eingangsseitigen Phasen (U, V, W) über die Phasenkondensatoren (9) verbunden sind.

2. Frequenzumrichter nach Anspruch 1,
wobei die netzseitigen Phasen (L1, L2, L3) innerhalb der Vorschaltung (4) zusätzlich über einen jeweiligen Schalter (10) unmittelbar mit jeweils einer anderen der eingangsseitigen Phasen (U, V, W) verbunden sind, so dass die netzseitigen Phasen (L1, L2, L3) bei geschlossenen Schaltern (10) mit den eingangsseitigen Phasen (U, V, W) kurzgeschlossen sind und die Phasenkondensatoren (9) jeweils zwei netzseitige Phasen (L1, L2, L3) bzw. zwei eingangsseitige Phasen (U, V, W) miteinander verbinden, und die Steuereinrichtung (11) dazu eingerichtet ist, die Schalter (10) beim Vorladen des Stützkondensators (3) geöffnet zu halten und bei Erreichen eines vorbestimmten zweiten Ladezustands (Z2) des Stützkondensators (3), der während des Vorladens des Stützkondensators (3) nach dem ersten Ladezustand (Z1) angenommen wird, zu schließen.

3. Frequenzumrichter nach Anspruch 2,
wobei die Steuereinrichtung (11) dazu eingerichtet ist, bei Erreichen des vorbestimmten zweiten Ladezustands (Z2)
- zunächst die aktiven Schaltelemente (8) derart anzusteuern, dass über die aktiven Schaltelemente (8) an die eingangsseitigen Phasen (U, V, W) eingangsseitige Phasenspannungen (UU, UV, UW) angelegt werden, die in Amplitude und Phase mit denjenigen netzseitigen Phasenspannungen (U1, U2, U3) korrespondieren, die an denjenigen netzseitigen Phasen (L1, L2, L3) anliegen, mit denen die eingangsseitigen Phasen (U, V, W) über die Phasenkondensatoren (9) verbunden sind,
- sodann die aktiven Schaltelemente (8) derart anzusteuern, dass die über die aktiven Schaltelemente (8) an die eingangsseitigen Phasen (U, V, W) angelegten eingangsseitigen Phasenspannungen (UU, UV, UW) stetig in diejenigen netzseitigen Phasenspannungen (U1, U2, U3) überführt werden, die an denjenigen netzseitigen Phasen (L1, L2, L3) anliegen, mit denen die eingangsseitigen Phasen (U, V, W) über die Schalter (10) verbunden sind, und
- die Schalter (10) erst nach dem Überführen der eingangsseitigen Phasenspannungen (UU, UV, UW) in diejenigen netzseitigen Phasenspannungen (U1, U2, U3), die an denjenigen netzseitigen Phasen (L1, L2, L3) anliegen, mit denen die eingangsseitigen Phasen (U, V, W) über die Schalter (10) verbunden sind, zu schließen.

4. Frequenzumrichter nach Anspruch 1, 2 oder 3, wobei die Vorschaltung (4) in Leitungen (14) zu den netzseitigen Phasen (L1, L2, L3) und/oder zu den eingangsseitigen Phasen (U, V, W) hin Induktivitäten (15, 16) aufweist.

5. Frequenzumrichter nach Anspruch 3 und 4, wobei die Induktivitäten (15, 16) derart in den Leitungen (14) angeordnet sind, dass sie sowohl bei geöffneten als auch bei geschlossenen Schaltern (10) von den aus dem Versorgungsnetz (5) eingespeisten und/oder über die Halbbrücken (6) fließenden Phasenströmen (I1, I2, I3, IU, IV, IW) durchflossen werden.

## Claims

1. Frequency converter,
- wherein the frequency converter has a rectifier (1) on the input side and at least one support capacitor (3) arranged downstream of the rectifier (1),
- wherein the rectifier (1) has multiple half-bridges (6) via which a respective input side phase (U, V, W) of the rectifier (1) feeds the support capacitor (3),
- wherein the half-bridges (6) have active switching elements (8) such that the rectifier (1) is designed as a recovery rectifier,
- wherein the input-side phases (U, V, W) of the rectifier (1) can be connected to grid-side phases (L1, L2, L3) of a multiphase supply grid (5) via an upstream circuit (4),
- wherein each grid-side phase (L1, L2, L3) can be connected to one of the input-side phases (U, V, W) within the upstream circuit (4) via a respective phase capacitor (9),
**characterised in that**
the frequency converter has a control facility (11) which is designed to control the active switching elements (8) when a first charge state (Z1) of the support capacitor (3) is reached such that input side phase voltages (UU, UV, UW) are applied to the input-side phases (U, V, W) via the active switching elements (8), said voltages running in the opposite direction to the grid-side phase voltages (U1, U2, U3) applied to the grid-side phases (L1, L2, L3) to which the input-side phases (U, V, W) are connected via the phase capacitors (9).

2. Frequency converter according to claim 1,
wherein the grid-side phases (L1, L2, L3) within the upstream circuit (4) are also directly connected to another of the respective input-side phases (U, V, W) via a respective switch (10) such that the grid-side phases (L1, L2, L3) are shortcircuited to the input-side phases (U, V, W) when the switches (10) are closed, and the phase capacitors (9) each connect two grid-side phases (L1, L2, L3) or two input-side phases (U, V, W) to one another, and the control facility (11) is designed to hold the switches (10) open when the support capacitor (3) is being pre-charged, and close said switches (10) when a predetermined second charge state (Z2) of the support capacitor (3) is reached, which is assumed to be during the pre-charging of the support capacitor (3) after the first charge state (Z1).

3. Frequency converter according to claim 2,
wherein, when the predetermined second charge state (Z2) is reached, the control facility (11) is designed to
- first control the active switching elements (8) such that input side phase voltages (UU, UV, UW) are applied to the input-side phases (U, V, W) via the active switching elements (8), which phase voltages correspond in amplitude and phase to those grid-side phase voltages (U1, U2, U3) which are applied to those grid-side phases (L1, L2, L3) to which the input-side phases (U, V, W) are connected via the phase capacitors (9),
- then control the active switching elements (8) such that the input-side phase voltages (UU, UV, UW) applied to the input-side phases (U, V, W) via the active switching elements (8) are continuously converted into those grid-side phase voltages (U1, U2, U3) which are applied to those grid-side phases (L1, L2, L3) to which the input-side phases (U, V, W) are connected via the switches (10), and
- only close the switches (10) after the input-side phase voltages (UU, UV, UW) have been converted into those grid-side phase voltages (U1, U2, U3) which are applied to those grid-side phases (L1, L2, L3) to which the input-side phases (U, V, W) are connected via the switches (10).

4. Frequency converter according to claim 1, 2 or 3,
wherein the upstream circuit (4) has inductances (15, 16) in lines (14) to the grid-side phases (L1, L2, L3) and/or to the input-side phases (U, V, W).

5. Frequency converter according to claim 3 and 4,
wherein the inductances (15, 16) are arranged in the lines (14) in such a way that the phase currents (I1, I2, I3, IU, IV, IW) fed from the supply grid (5) and/or flowing via the half-bridges (6) flow through said inductances both when the switches (10) are open and when the switches (10) are closed.

## Revendications

1. Convertisseur de fréquence,
- dans lequel le convertisseur de fréquence a, du côté de l'entrée, un redresseur (1) et un condensateur (3) d'appui, monté en aval du redresseur (1),
- dans lequel le redresseur (1) a plusieurs demi-ponts (6) par lesquels une phase (U, V, W) respective du côté de l'entrée du redresseur (1) alimente le condensateur (3) d'appui,
- dans lequel les demi-ponts (6) ont des éléments (8) actifs de coupure, de manière à constituer le redresseur (1) en convertisseur régénératif,
- dans lequel les phases (U, V, W) du côté de l'entrée du redresseur (1) peuvent être reliées par un ballast (4) à des phases (L1, L2, L3) du côté de réseau d'un réseau (5) d'alimentation polyphasé,
- dans lequel les phases (L1, L2, L3) du côté de réseau peuvent, à l'intérieur du ballast (4) et par un condensateur (9) respectif de phase, être reliées à respectivement à l'une des phases (U, V, W) du côté de l'entrée,
**caractérisé**
**en ce que** le convertisseur de fréquence a un dispositif (11) de commande, qui est agencé pour, lorsque le condensateur (3) d'appui atteint un premier état (Z1) de charge, commander des éléments (8) actifs de coupure, de manière à appliquer, par les éléments (8) actifs de coupure aux phases (U, V, W) du côté de l'entrée, de tensions (UU, UV, UW) de phases du côté de l'entrée, qui sont des sens opposé aux tensions (U1, U2, U3) de phases du côté du réseau, qui s'appliquent aux phases (L1, L2, L3) du côté du réseau, avec lesquelles les phases (U, V, W) du côté de l'entrée sont reliées par les condensateurs (9) de phase.

2. Convertisseur de fréquence suivant la revendication 1, dans lequel
les phases (L1, L2, L3) du côté du réseau sont reliées à l'intérieur du ballast (4) en outre par un interrupteur (10) respectif directement avec respectivement une autre des phases (U, V, W) du côté de l'entrée, de manière à ce que les phases (L1, L2, L3) du côté du réseau soient, lorsque les interrupteurs (10) sont fermés, court-circuitées avec les phases (U, V, W) du côté de l'entrée, et de manière à ce que les condensateurs (9) de phase relient entre elles respectivement deux phases (L1, L2, L3) du côté du réseau ou deux phases (U, V, W) du côté de l'entrée, et le dispositif (11) de commande est agencé pour maintenir les interrupteurs (10) ouverts, lors de la précharge du condensateur (3) d'appui, et pour les fermer lorsqu'est atteint un deuxième état (Z2) de charge déterminé à l'avance du condensateur (3) d'appui, qui est pris pendant la précharge du condensateur (3) d'appui après le premier état (Z1) de charge.

3. Convertisseur de fréquence suivant la revendication 2, dans lequel
le dispositif (11) de commande est agencé, lorsque le deuxième état (Z2) de charge déterminé à l'avance est atteint,
- pour commander d'abord les éléments actifs (8) de coupure, de manière à ce que, par les éléments (8) actifs de coupure, soient appliquées aux phases (U, V, W) du côté de l'entrée des tensions (UU, UV, UW) de phase du côté de l'entrée, qui correspondent en amplitude et en phase aux tensions (U1, U2, U3) de phase du côté du réseau, qui s'appliquent aux phases (L1, L2, L3) du côté du réseau, avec lesquelles les phases (U, V, W) du côté de l'entrée sont reliées par les condensateurs (9) de phase,
- pour commander ensuite les éléments (8) actifs de coupure, de manière à ce que les tensions (UU, UV, UW) de phase du côté de l'entrée, appliquées aux phases (U, V, W) du côté de l'entrée par les éléments (8) actifs de coupure, se transforment constamment en les tensions (U1, U2, U3) de phase du côté du réseau, qui s'appliquent aux phases (L1, L2, L3) du côté du réseau, avec lesquelles les phases (U, V, W) du côté de l'entrée sont reliées par les interrupteurs (10), et
- pour fermer les interrupteurs (10) seulement après le transfert des tensions (UU, UV, UW) de phase du côté de l'entrée en les tensions (U1, U2, U3) de phase du côté du réseau, qui s'appliquent aux phases (L1, L2, L3) du côté du réseau, avec lesquelles les phases (U, V, W) du côté de l'entrée sont reliées par les interrupteurs (10).

4. Convertisseur de fréquence suivant la revendication 1, 2 ou 3,
dans lequel
le ballast (4) a des inductances (15, 16) dans des lignes (14) allant aux phases (L1, L2, L3) du côté du réseau et/ou dans des phases (U, V, W) allant du côté de l'entrée.

5. Convertisseur de fréquence suivant la revendication 3 et 4,
dans lequel
les inductances (15, 16) sont montées dans les lignes (14), de manière à être parcourues tant lorsque les interrupteurs (10) sont ouverts qu'également lorsqu'ils sont fermés par les courants (I1, I2, I3, IU, IV, IW) de phase injectés à partir du réseau (5) d'alimentation et/ou passant par les demi-ponts (6).
